# EUROPEAN PATENT SPECIFICATION

(11) **EP 2 811 259 B1**
(45) Date of publication and mention of the grant of the patent: **03.07.2019**
(21) Application number: 13744197.8
(22) Date of filing: 17.01.2013
(51) Int. Cl.: G01C 3/06, G01B 11/00, G01B 11/02, G01B 11/06

(54) **CONFOCAL MEASUREMENT DEVICE**
KONFOKALE MESSVORRICHTUNG
DISPOSITIF DE MESURE CONFOCAL

(30) Priority: 03.02.2012 JP 2012022539
(43) Date of publication of application: 10.12.2014
(73) Proprietor: Omron Corporation, Kyoto-shi, Kyoto 600-8530 (JP)
(72) Inventor: HAYAKAWA, Masayuki, Kyoto-shi Kyoto 600-8530 (JP); YAMASHITA, Yoshihiro, Kyoto-shi Kyoto 600-8530 (JP)
(74) Representative: Horn Kleimann Waitzhofer Patentanwälte PartG mbB
(86) International application number: PCT/JP2013/050769
(87) International publication number: WO 2013/114959

(56) References cited:
- EP-A1- 1 975 554
- WO-A1-2010/094805
- DE-A1-102008 020 902
- JP-A- 2007 147 299
- JP-A- 2008 241 712
- RUPRECHT A K ET AL: "CHROMATIC CONFOCAL DETECTION FOR HIGH-SPEED MICROTOPOGRAPHY MEASUREMENTS", PROCEEDINGS OF SPIE, S P I E - INTERNATIONAL SOCIETY FOR OPTICAL ENGINEERING, US, vol. 5302, no. 1, 1 January 2003 (2003-01-01), pages 53-60, XP009084987, ISSN: 0277-786X, DOI: 10.1117/12.525658 ISBN: 978-1-62841-467-7
- W. LYDA ET AL: "<title>Chromatic confocal spectral interferometry for technical surface characterization</title>", PROCEEDINGS OF SPIE, vol. 7432, 20 August 2009 (2009-08-20), pages 74320Z-74320Z-9, XP055084346, ISSN: 0277-786X, DOI: 10.1117/12.826902

## Description

### FIELD

The present invention relates in general to a measurement device that contactlessly measures the profile of a measurement target, and in particular to a confocal measurement device that employs confocal optics to measure the profile of a measurement target.

### BACKGROUND

US Patent No. 5785851 (Patent Document 1) discloses a confocal measurement device which, among contactless measurement devices that measure the profile of a measurement target, employs confocal optics in measuring the profile of a target. The confocal measurement device disclosed in Patent Document 1 is provided with a light source capable of emitting polychromatic light (white light, for example), and a diffraction lens that chromatically distorts the light emitted from said light source. Given that the different wavelengths of light focus in accordance with the profile of the measurement target, the confocal measurement device disclosed in Patent Document 1 measures the wavelength of the light passing through a pinhole thus measuring the profile of the measurement target.

In principle, besides the first order light, higher order light such as second order light is present at the diffraction lens. Therefore, the order used in measurement is predetermined during the optical design of the diffraction lens employed in the confocal measurement device. For instance, if the first order is selected as the order to be used during measurement and the optical system is designed with that in mind, arranging the objective at a location where the first order light will focus allows the confocal measurement device to measure the profile of the measurement target.

However, there are cases where the confocal measurement device measures signals from higher order light (erroneous signals) even when the system is designed to use the first order for measurement. In particular, if the measurement target has a mirrored surface, the confocal measurement device measures more of the signals from the higher order light reflected from the mirrored surface of the object. Thus, the measurements of a confocal measurement device are greatly impacted by the higher order light. For instance, when the measurement target is placed at a location where the second order light focuses, there are cases where the confocal measurement device mistakenly uses the signals (erroneous signals) from the second order light to measure the profile of the measurement target. Additionally, there are cases where the confocal measurement device measures signals (erroneous signals) from light within the first order light reflected by the measurement target as second order light, or light within the second order light reflected as first order light (hereinafter also referred to as reflected different order light) and measures an erroneous profile for the measurement target.

In particular, the diffraction efficiency varies greatly between the first order diffraction efficiency and the second order diffraction efficiency within a designed diffraction order. Therefore, it is the erroneous signals from first order light reflected by the measurement object as second order light (reflected different order light), more so than the erroneous signals from second order light, which tend to have a greater intensity and increase the probability of erroneous measurement in the confocal measurement device.

With this in mind, Japanese Unexamined Patent Application Publication No. 2004-126394 (Patent Document 2) and 2011-170028 (Patent Document 3) disclose a diffraction lens whereby it is possible to mitigate the effects of higher order light on measurement. The diffraction lenses disclosed in Patent Documents 2 and 3 are multi-layered diffraction lenses constituted by a plurality of diffractive elements having serrated surfaces. WO 2010/094805 A1 discloses a confocal measurement device with a polychromatic light source and a rotating mirror.

### CITATION LIST

### PATENT DOCUMENTS

Patent Document 1: US Patent No. 5785651
Patent Document 2: Japanese Unexamined Patent Publication No. 2004-126394
Patent Document 3: Japanese Unexamined Patent Publication No. 2011-170028

### SUMMARY

### TECHNICAL PROBLEM

Compared to a single-layer diffraction lens, the diffraction lenses disclosed in Patent Documents 2 and 3 require complicated production processes and disadvantageously increase the production cost. Additionally, when a multi-layered diffraction lens is used in the confocal measurement device, a diffractive element having a serrated surface is designed for use in the optical system of said confocal measurement device, however the disadvantage is that the layering of the diffractive element that is required increases the design and development costs.

With the above in mind, the present invention provides a confocal measurement device capable of mitigating the influence of reflected different order light in particular which has a high probability of being erroneously measured.

### SOLUTION TO PROBLEM

The present invention provides a confocal measurement device according to claim 1.

The confocal measurement device according to the present invention may also be provided with an objective arranged closer to the measurement target than the diffraction lens wherein the objective focuses light chromatically distorted by the diffraction lens onto the measurement target.

According to another embodiment, the present invention also provides a confocal measurement device according to claim 3.

The confocal measurement device according to another embodiment may also be provided with an optical fiber used as the optical path from the diffraction lens to the light source and to the measurement unit, wherein the end of the optical fiber is inclined relative to the optical axis of the optical element.

According to another embodiment, the present invention also provides a confocal measurement device according to claim 5.

A confocal measurement device according yet another embodiment of the present invention is further provided with an objective arranged closer to the measurement target than the diffraction lens, wherein the objective focuses light chromatically distorted by the diffraction lens onto the measurement target. Effects

With the above described configuration, a confocal measurement device according to the present invention offsets the optical axis whereon the diffraction light of the order used for measurement focuses, and the position where reflected different order light focuses making it less likely the reflected different order light is received, and mitigating the impact of the reflected different order light on measurement.

### BRIEF DESCRIPTION OF THE DRAWINGS

FIG. 1 is a schematic view illustrating a configuration of a confocal measurement device according to the first embodiment of the present invention.
FIG. 2 is a schematic view illustrating a configuration of the confocal optics in the optical head adopted in the confocal measurement device according to the first embodiment of the present invention.
FIG. 3 is a schematic view illustrating the location of a receptacle mounted to the end face of the optical head according to the first embodiment of the present invention.
FIG. 4 is a schematic view used to describe the behavior of diffraction light in the optical head adopted in the confocal measurement device according to the first embodiment of the present invention.
FIG. 5 is a schematic view used in describing the behavior of diffraction light in the optical head when the optical axis of the optical fiber and the optical axis of the diffraction lens are aligned, and the end of the optical fiber is aligned with the optical axis of the diffraction lens.
FIG. 6 is a schematic view illustrating a configuration of the confocal optics in an optical head adopted in a confocal measurement device according to the second embodiment of the present invention.
FIG. 7 is a schematic view illustrating a configuration of the confocal optics in an optical head adopted in a third embodiment of the confocal measurement device.

### DETAILED DESCRIPTION

Embodiments of the present invention will be described in detail with reference to the drawings.

### First Embodiment

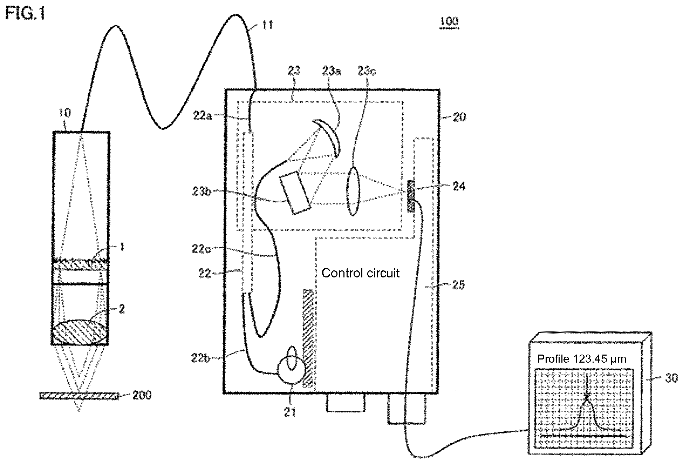

FIG. 1 is a schematic view illustrating a configuration of a confocal measurement device according to the first embodiment of the present invention. The confocal measurement device illustrated in FIG. 1 uses confocal optics in an optical head 10 to measure the profile of a measurement target 200. The measurement target 200 measured by the confocal measurement device 100 may be the cell gap in a liquid crystal display panel.

The confocal measurement device 100 is provided with an optical head 10 which includes confocal optics, a controller 20 optically coupled via an optical fiber 11, and a monitor 30 which displays signals output from the controller 20.

The optical head 10 is provided with a diffraction lens 1, and an objective 2 arranged closer to the measurement target 200 than the diffraction lens 1. The focal length of the diffraction lens 1 is greater than the difference between the distance from the diffraction lens to the objective, and the focal length of the objective.

As an optical element, the diffraction lens 1 chromatically distorts the light emitted from a light source (such as a white light source) along the direction of the optical axis. The surface of the diffraction lens 1 may have microscopic reliefs such as kinoforms or binary forms (for example steps, and stairs) formed at intervals, or may have a zone plate which has periodically variable optical transmission properties. The diffraction lens 1 is not particularly limited to the above described configuration.

The objective 2 focuses the chromatically distorted light created by the diffraction lens 1 onto the measurement target 200. Described below are cases where a white light source is used as the polychromatic light emission source.

The light emitted from a white light source is guided to the optical head 10 via the optical fiber 11. The optical fiber 11 and the optical head 10 are connected so that a primary light ray from the white light source is offset relative to the optical axis of the diffraction lens 1. A detailed configuration of the optical head 10 including the connection with the optical fiber 11 is later described. A primary light ray from the white light source to the diffraction lens 1 is the light emitted from the light source and passing through the center of an aperture in the diffraction lens; thus, a light ray passing through the center of the aperture of the optical fiber 11 and through the center of the aperture in the diffraction lens will be referred to as the primary light ray from the optical fiber 11. Additionally, in this instance the range in the diffraction lens wherethrough light emitted from the optical fiber 11 is transmitted is referred to as the aperture in the diffraction lens.

The optical fiber 11 establishes an optical path from the optical head 10 to the controller 20 and also acts as a pinhole. That is, the light within the light focused by the objective and focused on the measurement target 200 is thus focused at the aperture in the optical fiber 11. Therefore the optical fiber 11 blocks light of wavelengths not focused on the measurement target 200, and functions as a pinhole by allowing light focused on the measurement target 200 to pass therethrough. Using the optical fiber 11 as the optical path from the optical head 10 to the controller 20 eliminates the need for a pinhole.

The confocal measurement device 100 may employ a configuration where the optical fiber 11 does not form the optical path from the optical head 10 to the controller 20, however using said optical fiber 11 allows the optical head 10 to be freely movable relative to the controller 20. Furthermore, providing a pinhole is necessary when the confocal measurement device 100 employs a configuration without the optical fiber 11 forming the optical path from the optical head 10 to the controller 20, however if the confocal measurement device100 employs the optical fiber 11, providing a pinhole is unnecessary.

The controller 20 is provided with a white light emitting device (LED) 21 which acts as the white light source, a branching optical fiber 22, a spectrometer 23, an imaging element 24, and a control circuit 25. While the white LED 21 may be used as the white light source, another type of light source may be used, so long as that light source emits white light.

The branching optical fiber 22 includes a single optical fiber 22a near the end connected to the optical fiber 11, and two optical fibers 22b, 22c on the opposite end. The optical fiber 22b and the optical fiber 22c are connected to the white LED 21 and the spectrometer 23, respectively. Therefore, the branching optical fiber 22 guides light emitted from the white LED 21 to the optical fiber 11, and guides light returning from the optical head 10 via the optical fiber 11 to the spectrometer 23.

The spectrometer23 includes a concave mirror 23a that reflects the light returning from the optical head 10, a diffraction grating 23b into which light reflected from the concave mirror 23a enters, and a condenser lens 23c which focuses the light emitted from the diffraction grating 23b. The spectrometer 23 may have any configuration, as long as the spectrometer 23 is capable of spectral separation of the light returning from the optical head 10.

The imaging element 24 is a line complementary metal-oxide-semiconductor (CMOS) that measures the intensity of the light emitted from the spectrometer 23 and a charge-coupled device (CCD). The confocal measurement device is configured with a measurement unit that uses the spectrometer 23 and the imaging element 24 to measure the intensity of each wavelength in the light returning from the optical head 10. As long as it is possible to measure each wavelength in the light returning from the optical head 10, the measurement unit may be configured with a standalone imaging element 24, for example, with a CCD.

The control circuit 25 controls the operation of the white LED 21, the imaging element 24, and the like. Additionally, although not illustrated, the control circuit 25 includes an input interface for inputting signals that modify the operation of the white LED 21 and the imaging element 24, and an output interface for outputting signals from the imaging element 24.

The monitor 30 displays the signals output from the imaging element 24. For instance the monitor 30 draws a spectral waveform representing the light returning from the optical head, displaying that the profile of the measurement target is 123.45 µm.

Because the confocal measurement device uses a diffraction lens 1 in the optical head 10, even when the first order is selected as the order to be used for measurement, there are cases where the device will measure an erroneous signal from a (higher) diffraction order outside the order being used for measurement. When the measurement target 200 has a mirrored surface in particular, the measurement by the confocal measurement device 100 is greatly impacted by the (higher) diffraction orders outside the order being used for measurement. Thus, modifying the configuration of the confocal optics in the optical head 10 thereby mitigates the impact on measurement in the confocal measurement device 100 due to the diffraction light of orders outside the order used for measurement.

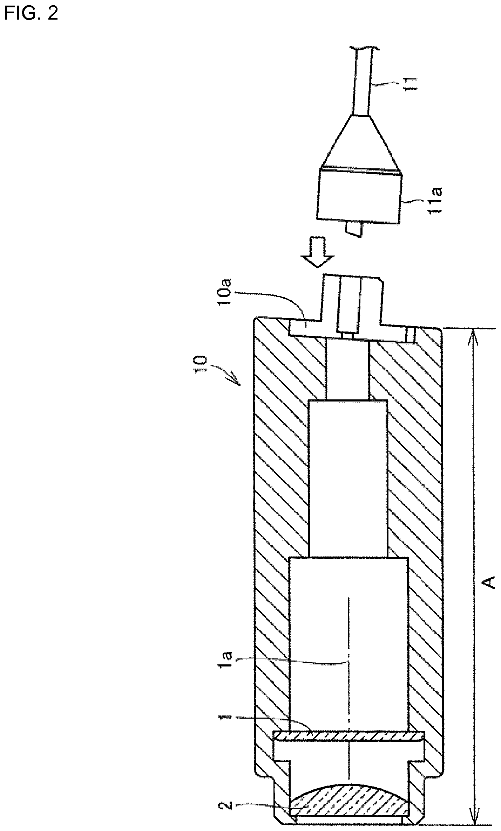

FIG. 2 is a schematic view illustrating a configuration of the confocal optics in the optical head 10 adopted in the confocal measurement device 100 according to the first embodiment of the present invention. The confocal optics in the optical head 10 illustrated in FIG. 2 is configured such that the objective 2 is arranged closer to the measurement target 200 than the diffraction lens 1. That is, the optical head 10 uses the diffraction lens 1 to chromatically distort the light emitted from the end of the optical fiber 11 along the direction of the optical axis and then uses the objective to focus the chromatically distorted light onto the measurement target 200. The optical head 10 is not limited to arranging the objective 2 closer to the measurement target 200 than the diffraction lens 1; an optical element such as a lens may be arranged closer to the optical fiber 11 than the diffraction lens 1. Additionally the optical head 10 does not necessarily require an objective 2 arranged therein.

The connection between the optical fiber 11 and the optical head 10 may be implemented by engaging a connector 11a installed on the end of the optical fiber 11, and a receptacle 10a provided on the end surface of the optical head 10.

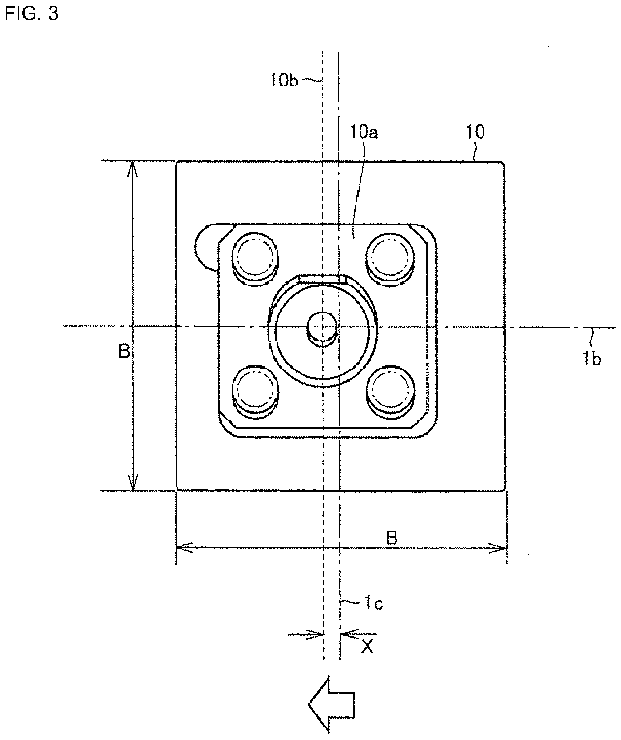

The positioning of the receptacle 10a mounted to the end surface of the optical head 10 is described. FIG. 3 is a schematic view illustrating the location of a receptacle 10a mounted to the end face of the optical head 10 according to the first embodiment of the present invention. The receptacle 10a is mounted to the end surface of the optical head 10, offset from the center of the diffraction lens 1 in the horizontal direction in the drawing.

The center lines 1b, 1c passing through the center of the diffraction lens 1, and the center line 10b passing through the center of the receptacle 10a are respectively shown as illustrated in FIG. 3. The center of the receptacle 10a coincides with the center of the diffraction lens 1 relative to the orthogonal direction, therefore the center line passing through the center of the receptacle 10a in the horizontal direction overlaps with the center line 1b passing through the center of the diffraction lens 1 and is thus not illustrated.

As can be understood from FIG. 3, the center line 10b passing through the center of the receptacle 10a is offset to the left in the drawing of the center line 1c passing through the center of the diffraction lens 1, and the center of the receptacle 10a is offset relative to the center of the diffraction lens 1 in the horizontal direction. Therefore, when the connector 11a engages with the receptacle 10a, the end of the optical fiber 11 is offset relative to the optical axis of the diffraction lens 1 to connect the optical fiber 11 and the diffraction lens 1. Accordingly, the primary light ray from the optical fiber 11 that passes through the center of the receptacle 10a, is offset relative to the optical axis of the diffraction lens 1 and therefore, a primary light ray does not travel along the optical axis of the diffraction lens 1 but is inclined relative to the optical axis of the diffraction lens 1. Moreover, the amount of offset X of the receptacle 10a (FIG. 3) is approximately 0.2 mm to 0.3 mm when, for example, the lengthwise dimension A (FIG. 2) and the widthwise dimension (B) (FIG. 3) at the end surface of the optical head 10 are 64 mm and 24 mm respectively.

The optical head 10 is offsets the primary light ray from the optical fiber 11 relative to the optical axis of the diffraction lens 1, and the primary light ray from the optical fiber is inclined in relation to the optical axis of the diffraction lens 1. Hereby the optical head offsets the optical axis on which the diffraction light of the order used for measurement (for example, the first order) focuses, and the position at which the reflected different order light focuses.

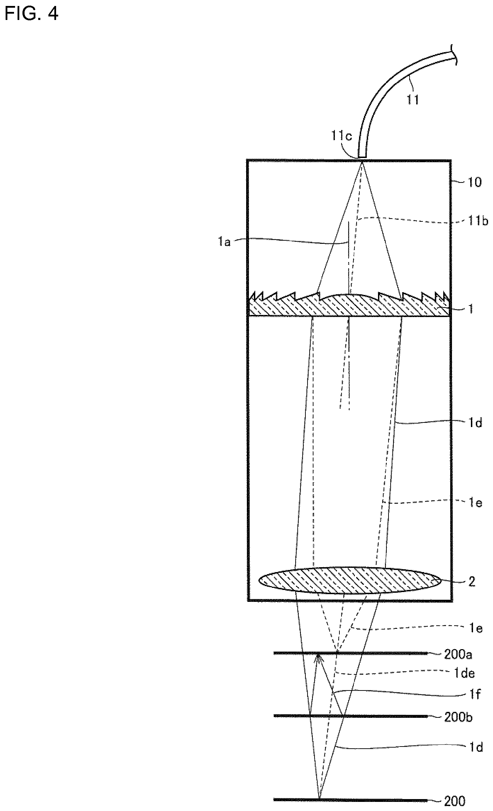

More specifically, the relationship between the position at which the diffraction light of the order used for measurement, and the reflected different order light of other orders focuses is described with reference to a schematic drawing. FIG. 4 is a schematic view used to describe the behavior of diffraction light in the optical head 10 adopted in the confocal measurement device 100 according to the first embodiment of the present invention. Here, the first order is the order used for measurement.

The optical head 10 illustrated in FIG. 4 offsets the primary light ray 11b from the optical fiber 11 relative to the optical axis 1a of the diffraction lens 1, and the primary light ray from the optical fiber 11 is inclined in relation to the optical axis of the diffraction lens 1. Moreover offsetting the primary light ray 11b from the optical fiber 11 in relation to the optical axis 1a of the diffraction lens 1 is not limited to the case where the primary light ray 11b from the optical fiber 11 and the optical axis 1a of the diffraction lens are merely shifted in a parallel direction, this offsetting includes cases where the primary light ray 11b from the optical fiber 11 and the optical axis 1a of the diffraction lens 1 are offset at an angle.

Therefore, first order light 1d diffracted by the diffraction lens 1, reflected at a virtual surface 200b and then focused on a virtual surface 200a as second order light (first-to-second order light) If is no longer located at the positions whereon the first order light 1d from the diffraction lens 1, and the second order light 1e focuses toward and passes through the optical axis 1de (also referred to hereafter as the optical axis 1de on which the first order light 1d focuses). Accordingly, the reflected different order light like the light If does not focus on the optical axis 1de, and the measurement unit tends not to measure the erroneous signals from the second order light 1e. Besides the light If, there is also second order light (not shown) in the reflected different order light that focuses on the measurement target 200 as first order light.

Accordingly, because the optical axis 1de on which first order light 1d focuses, and the position at which the reflected different order light focuses are offset, the optical head 10 illustrated in FIG. 4 receives less of the reflected different order light and the ratio of erroneous signals included in a measured signal decreases.

In contrast, a focal measurement device which aligns the primary light ray from the optical fiber 11 with the optical axis of the diffraction lens is described.

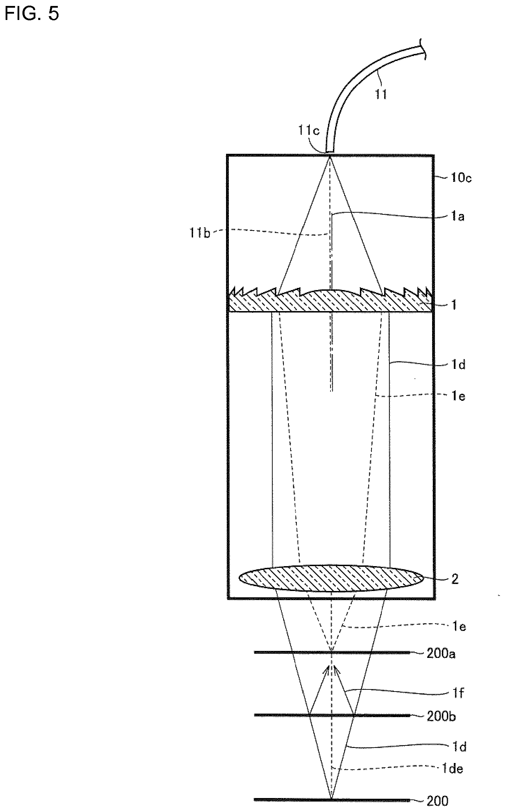

FIG. 5 is a schematic view used in describing the behavior of diffraction light in the optical head 10 when primary light ray from the optical fiber 11 and the optical axis of the diffraction lens 1 are aligned. Here, the first order is the order used for measurement.

The optical head 10c aligns the primary light ray 11b from the optical fiber 11 with the optical axis 1a of the diffraction lens 1.

Therefore, light within the first order light 1d from the diffraction lens 1 that is reflected at the virtual surface 200b and focused at the virtual surface 200a as second order light (first-to-second order light) If is located on the optical axis 1de where the first order light 1d focuses. Accordingly, the reflected different order light like the light If focuses on the optical axis 1de, and the measurement unit measures the erroneous signals from the second order light 1e.

Therefore, the impact on measurement due to the diffraction light of orders other than the order used for measurement also affects the optical head 10c.

As above described, in the confocal measurement device 100 according to the first embodiment of the present invention, the optical head 10 offsets the primary light ray 11b from the optical fiber 11 relative to the optical axis 1a of the diffraction lens 1. Therefore, the configuration of the confocal measurement device 100 according to the first embodiment of the present invention can offset the optical axis 1de where the first order light 1d focuses and the position where the reflected different order light focuses and thus the confocal measurement device receives less of the reflected different order light and can mitigate the impact of the reflected different order light on measurement.

Moreover, as illustrated in FIG. 4, the optical head 10 is not limited to having the optical axis of the objective 2 coincide with the optical axis 1a of the diffraction lens 1; the optical axis of the objective 2 may be offset relative to the optical axis of the diffraction lens 1.

### Second Embodiment

What follows is a description of a second embodiment of the present invention which has a different configuration from that of the confocal measurement device 100 of the first embodiment, and which is capable of mitigating the impact on measurement due to the diffraction light of orders outside the order used for measurement.

Except for the optical head 10, the confocal measurement device according to the second embodiment has the same configuration as the confocal measurement device 100 according to the first embodiment illustrated in FIG. 1, therefore the same reference numerals are used for the same components, and a detailed explanation is not repeated.

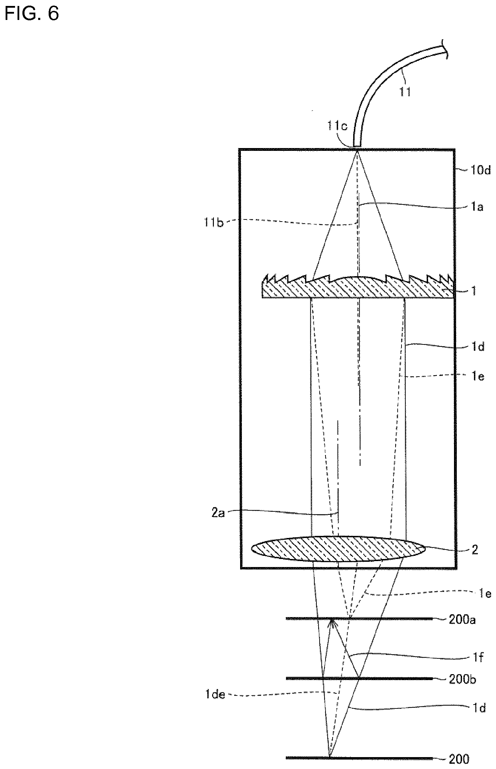

FIG. 6 is a schematic view illustrating a configuration of the confocal optics in an optical head adopted in a confocal measurement device according to the second embodiment. The confocal optics in the optical head 10d illustrated in FIG. 6 is configured such that the objective 2 is arranged closer to the measurement target 200 than the diffraction lens 1. That is, the optical head 10d uses the diffraction lens 1 to chromatically distort the light emitted from the end of the optical fiber 11 along the optical axis and then uses the objective 2 to focus the chromatically distorted light onto the measurement target 200. The optical head 10d is not limited to arranging the objective 1 closer to the measurement target 2 than the diffraction lens 1; an optical element such as a lens may be arranged closer to the optical fiber 11 than the diffraction lens 200.

As illustrated in FIG. 2, the connection between the optical fiber 11 and the optical head 10d may be implemented by engaging a connector 11a installed on the end of the optical fiber 11, and a receptacle 10a provided on the end surface of the optical head.

The optical head 10d illustrated in FIG. 6 aligns the primary light ray 11b from the optical fiber 11 with the optical axis 1a of the diffraction lens 1. However, the optical axis 2a of the objective 2 is offset relative to the optical axis 1a of the diffraction lens 1. Offsetting the optical axis 2a of the objective 2 relative to the optical axis 1a of the diffraction lens 1 is not necessarily limited to the case where the optical axis 2a of the objective 2 is offset parallel to the optical axis 1a of the diffraction lens 1 but also includes cases where the optical axis 2a of the objective 2 and the optical axis 1a of the diffraction lens 1 are inclined and offset. The objective 2 focuses the primary light ray 11b from the optical fiber 11 onto the measurement target 200. Accordingly the objective 2 focuses first order light 1d onto the optical axis 1de.

Therefore, light within the first order light 1d from the diffraction lens 1 that is reflected at the virtual surface 200b and focused at the virtual surface 200a as second order light (first-to-second order light) If is no longer located on the optical axis 1de where the first order light 1d focuses. Accordingly, the reflected different order light like the light If does not focus on the optical axis 1de, and the measurement unit tends not to measure the erroneous signals from the second order light 1e. Besides the light If, there is also second order light (not shown) in the reflected different order light that focuses on the measurement target 200 as first order light.

Accordingly, because the optical axis 1de on which first order light 1d focuses, and the position at which the reflected different order light focuses are offset, the optical head 10 illustrated in FIG. 6 receives less of the reflected different order light and the ratio of erroneous signals included in a measured signal decreases.

As above described, in the confocal measurement device according to the second embodiment of the present invention, the optical head 10 offsets the primary light ray 11b from the optical fiber 11 relative to the optical axis 1a of the diffraction lens 1. Therefore, the configuration of the confocal measurement device according to the second embodiment of the present invention can offset the optical axis 1de where the first order light 1d focuses and the position where the reflected different order light focuses, and thus the confocal measurement device receives less of the reflected different order light and can mitigate the impact of the reflected different order light on measurement.

The confocal measurement device according to embodiment 2 of the present invention may be configured such that an optical element such as a lens is additionally arranged closer to the optical fiber 11 than the diffraction lens 1, with the optical axis of said optical element offset relative to the optical axis 1a of the diffraction lens 1.

### Third Embodiment

What follows is a description of a third embodiment of the present invention which has a different configuration from that of the confocal measurement device of the first and second embodiments, and which is capable of mitigating the impact on measurement due to the diffraction light of orders outside the order used for measurement.

Except for the optical head, the confocal measurement device according to the third embodiment has the same configuration as the confocal measurement device 100 according to the first embodiment illustrated in FIG. 1, therefore the same reference numerals are used for the same components, and a detailed explanation is not repeated.

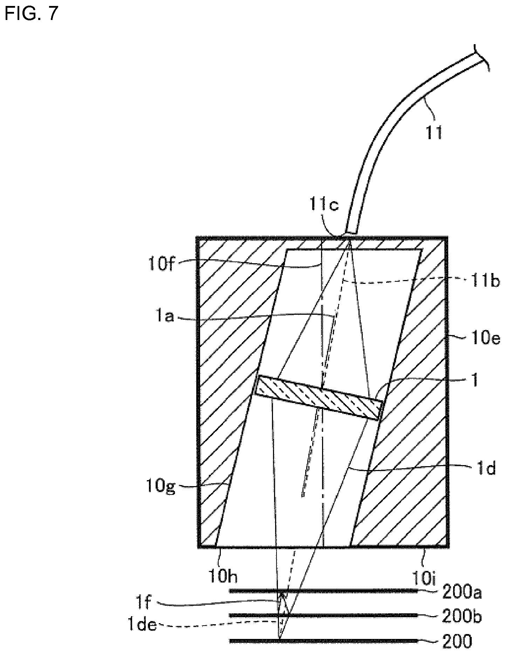

FIG. 7 is a schematic view illustrating a configuration of the confocal optics in an optical head adopted in a third embodiment of the confocal measurement device. The confocal optics in the optical head 10e illustrated in FIG. 7 is configured with only the diffraction lens 1; an objective 2 is not arranged near the measurement target 200. That is, the optical head 10e uses the diffraction lens 1 to chromatically distort the light emitted from the end of the optical fiber 11 along the direction of the optical axis and then focuses the chromatically distorted light onto the measurement target 200. Similarly to a configuration where an objective 2 is arranged closer to the measurement target 200 than the diffraction lens 1, an optical element such as a lens may be arranged closer to the optical fiber 11 than the diffraction lens 1 in the optical head 10e.

Additionally, the diffraction lens 1 may be secured in the optical head 10e so that the optical axis 1a of the diffraction lens 1 is relative to the long axis If of the optical head 10e. Moreover the optical head 10e aligns the primary light ray 11b from the optical fiber 11 with the optical axis 1a of the diffraction lens 1.

As an example of a method for manufacturing the optical head 10e, for instance, a bore 10g is made in the housing of the optical head 10e and the diffraction lens 1 inserted through the opening 10h of the bore 10g to secure the diffraction lens 1 in a predetermined position so that the diffraction lens 1 inclines relative to the long axis 10f of the optical head 10e. Additionally, the optical fiber 11 is connected on the side opposite the opening.

The third embodiment of the confocal measurement device disposes the optical head 10e so that the normal of the measurement target 200 coincides with the long axis 10f of the optical head 10e, and measures the profile of the measurement target 200. Arranging the optical head in this manner allows first order light 1d from the diffraction lens 1 to be focused on the object. The first order light 1d is focused along the optical axis 1de.

However, the light emitted from the opening 10h of the optical head 10 is inclined relative to the measurement target 200. Therefore, light within the first order light 1d from the diffraction lens 1 that is reflected at the virtual surface 200b and focused at the virtual surface 200a as second order light (first-to-second order light) If is no longer located on the optical axis 1de where the first order light 1d focuses. Accordingly, the reflected different order light like the light If does not focus on the optical axis 1de, and the measurement unit tends not to measure the erroneous signals from the second order light 1e. Besides the light If, there is also second order light (not shown) in the reflected different order light that focuses on the measurement target 200 as first order light.

Accordingly, because the optical axis 1de on which first order light 1d focuses and the position at which the reflected different order light focuses are offset, the optical head 10 illustrated in FIG. 7 receives less of the reflected different order light and the ratio of erroneous signals included in a measured signal decreases.

As above described, the diffraction lens 1 is secured in the optical head 10e so that the optical axis 1a of the diffraction lens 1 is inclined relative to the long axis 10f of the optical head 10e in the confocal measurement device according to the third embodiment of the present invention. Therefore, the configuration of the confocal measurement device according to the third embodiment of the present invention can offset the optical axis 1de where the first order light 1d focuses and the position where the reflected different order light focuses and thus the confocal measurement device receives less of the reflected different order light and can mitigate the impact of the reflected different order light on measurement.

Moreover, although the optical head 10e is defined as securing the diffraction lens 1 so that the optical axis 1a of the diffraction lens 1 is inclined relative to the long axis 10f of the optical head 10e, the diffraction lens 1 may be secured such that the optical axis 1a of the diffraction lens is inclined relative to an emission surface 10i of the optical head 10e from which light is emitted toward the measurement target 200. That is, if the optical head 10e and the measurement target 200 are arranged facing each other for measuring the profile of the measurement target 200, the optical head 10e may be configured so that the optical axis 1a of the diffraction lens 1 is inclined relative to the measurement target 200. Additionally the emission surface 10i of the optical head 10e is a virtual surface facing the measurement target 200 and need not be an actual surface of the housing for the optical head 10e.

All aspects of the embodiments disclosed should be considered merely examples and not limitations as such. The scope of the present invention is not limited to the above description but to the scope of the claims, and is intended to include all equivalents and modifications as defined by the claims.

### Reference Numerals

- 1: Diffraction lens
- 2: Objective
- 10, 10c, 10d, 10e: Optical head
- 10a: Receptacle
- 11, 22a, 22b, 22c: Optical fiber
- 11a: Connector
- 20: Controller
- 21: White LED
- 22: Branching optical fiber
- 23: Spectrometer
- 23a: Concave mirror
- 23b: Diffraction grating
- 23c: Condenser lens
- 24: Imaging element
- 25: Control circuit
- 30: Monitor
- 100: Confocal measurement device
- 200: Measurement target

## Claims

1. A confocal measurement device using confocal optics to measure a profile of a measurement target (200), the confocal measurement device comprising:
a light source (21) for emitting polychromatic light;
a diffraction lens (1) for chromatically distorting the light emitted from the light source (21) along the direction of an optical axis;
a measurement unit (23, 24) for measuring the intensity at each wavelength of the light within the chromatically distorted light created by the diffraction lens (1) and focused on the measurement target (200); and
an optical fiber (11) serving as an optical path from the diffraction lens (1) to the light source (21) and to the measurement unit (23, 24); wherein
the end of the optical fiber (11) is inclined relative to the optical axis of the diffraction lens (1), so that the primary light ray from the light source (21) to the diffraction lens (1) is inclined relative to the optical axis of the diffraction lens (1).

2. The confocal measurement device according to claim 1 further comprising: an objective (2) arranged closer to the measurement target (200) than the diffraction lens (1), wherein the objective (2) focuses light chromatically distorted by the diffraction lens (1) onto the measurement target (200).

3. A confocal measurement device using confocal optics to measure a profile of a measurement target (200), the confocal measurement device comprising:
a light source (21) for emitting polychromatic light;
a diffraction lens (1) for chromatically distorting the light emitted from the light source (21) along the direction of an optical axis;
an optical element (2) arranged either between the light source (21) and the diffraction lens (1), or closer to the measurement target (200) than the diffraction lens (1); and
a measurement unit (23, 24) for measuring the intensity at each wavelength of the light within the chromatically distorted light created by the diffraction lens (1) and focused on the measurement target (200); wherein
a primary light ray from the light source (21) towards the diffraction lens (1) coincides with the optical axis of the diffraction lens (1), and an optical axis of the optical element (2) is offset relative to the optical axis of the diffraction lens (1).

4. The confocal measurement device according claim 3 further comprising: an optical fiber (11) used as the optical path from the diffraction lens (1) to the light source (21) and to the measurement unit (23, 24); wherein
the end of the optical fiber (11) is inclined relative to the optical axis of the optical element (2).

5. A confocal measurement device using confocal optics to measure a profile of a measurement target (200), the confocal measurement device comprising:
a light source (21) for emitting polychromatic light;
a diffraction lens (1) for chromatically distorting the light emitted from the light source (21) along the direction of an optical axis;
a measurement unit (23, 24) for measuring the intensity at each wavelength of the light within the chromatically distorted light created by the diffraction lens (1) and focused on the measurement target (200); and
an optical measurement head (10) storing the diffraction lens (1); wherein
the optical axis of the diffraction lens (1) is inclined relative to the long axis of the optical measurement head (10e), or relative to an emission surface (10i) of the optical measurement head (10) wherefrom light is emitted towards the measurement target (200).

6. The confocal measurement device according to claim 5 further comprising: an objective (2) arranged closer to the measurement target (200) than the diffraction lens (1), wherein the objective (2) focuses light chromatically distorted by the diffraction lens (1) onto the measurement target (200).

## Patentansprüche

1. Konfokale Messvorrichtung, die konfokale Optik verwendet, um ein Profil eines Messziels (200) zu messen, wobei die konfokale Messvorrichtung aufweist:
eine Lichtquelle (21) zum Emittieren von polychromatischem Licht;
eine Diffraktionslinse (1) zum chromatischen Verzerren des Lichts, das aus der Lichtquelle (21) entlang der Richtung einer optischen Achse emittiert wird;
eine Messeinheit (23, 24) zum Messen der Intensität bei jeder Wellenlänge des Lichts innerhalb des chromatisch verzerrten Lichts, das durch die Diffraktionslinse (1) erzeugt wird und das auf das Messziel (200) fokussiert wird; und
eine optische Faser (11), die als ein optischer Pfad von der Diffraktionslinse (1) zu der Lichtquelle (21) und zu der Messeinheit (23, 24) dient; wobei
das Ende der optischen Faser (11) relativ zu der optischen Achse der Diffraktionslinse (1) geneigt ist, so dass der primäre Lichtstrahl von der Lichtquelle (21) zu der Diffraktionslinse (1) relativ zu der optischen Achse der Diffraktionslinse (1) geneigt ist.

2. Konfokale Messvorrichtung gemäß Anspruch 1, welche ferner aufweist:
ein Objektiv (2), das näher an dem Messziel (200) angeordnet ist als die Diffraktionslinse (1), wobei das Objektiv (2) das durch die Diffraktionslinse (1) chromatisch verzerrte Licht auf das Messziel (200) fokussiert.

3. Konfokale Messvorrichtung, die konfokale Optik verwendet, um ein Profil eines Messziels (200) zu messen, wobei die konfokale Messvorrichtung aufweist:
eine Lichtquelle (21) zum Emittieren von polychromatischem Licht;
eine Diffraktionslinse (1) zum chromatischen Verzerren des Lichts, das aus der Lichtquelle (21) entlang der Richtung einer optischen Achse emittiert wird;
ein optisches Element (2), das entweder zwischen der Lichtquelle (21) und der Diffraktionslinse (1) oder näher an dem Messziel (200) als die Diffraktionslinse (1) angeordnet ist; und
eine Messeinheit (23, 24) zum Messen der Intensität bei jeder Wellenlänge des Lichts innerhalb des chromatisch verzerrten Lichts, das durch die Diffraktionslinse (1) erzeugt wird und das auf das Messziel (200) fokussiert ist; wobei
ein primärer Lichtstrahl aus der Lichtquelle (21) in Richtung der Diffraktionslinse (1) mit der optischen Achse der Diffraktionslinse (1) zusammenfällt und eine optische Achse des optischen Elements (2) relativ zu der optischen Achse der Diffraktionslinse (1) versetzt ist.

4. Konfokale Messvorrichtung gemäß Anspruch 3, welche ferner aufweist:
eine optische Faser (11), die als optischer Pfad von der Diffraktionslinse (1) zu der Lichtquelle (21) und zu der Messeinheit (23, 24) verwendet wird; wobei
das Ende der optischen Faser (11) relativ zu der optischen Achse des optischen Elements (2) geneigt ist.

5. Konfokale Messvorrichtung, die konfokale Optik verwendet, um ein Profil eines Messziels (200) zu messen, wobei die konfokale Messvorrichtung aufweist:
eine Lichtquelle (21) zum Emittieren von polychromatischem Licht;
eine Diffraktionslinse (1) zum chromatischen Verzerren des Lichts, das aus der Lichtquelle (21) entlang der Richtung einer optischen Achse emittiert wird;
eine Messeinheit (23, 24) zum Messen der Intensität bei jeder Wellenlänge des Lichts innerhalb des chromatisch verzerrten Lichts, das durch die Diffraktionslinse (1) erzeugt wird und das auf das Messziel (200) fokussiert wird; und
einen optischen Messkopf (10), der die Diffraktionslinse (1) aufnimmt; wobei
die optische Achse der Diffraktionslinse (1) relativ zu der langen Achse des optischen Messkopfs (10e) geneigt ist oder relativ zu einer Emissionsoberfläche (10i) des optischen Messkopfs (10) geneigt ist, von wo Licht in Richtung des Messziels (200) emittiert wird.

6. Konfokale Messvorrichtung gemäß Anspruch 5, welche ferner aufweist:
ein Objektiv (2), das näher an dem Messziel (200) als die Diffraktionslinse (1) angeordnet ist, wobei das Objektiv (2) das durch die Diffraktionslinse (1) chromatisch verzerrte Licht auf das Messziel (200) fokussiert.

## Revendications

1. Dispositif de mesure confocal faisant appel à de l'optique confocale pour mesurer un profil d'une cible de mesure (200), le dispositif de mesure confocal comprenant :
une source de lumière (21) destinée à émettre de la lumière polychromatique ;
une lentille de diffraction (1) permettant une distorsion chromatique de la lumière émise à partir de la source de lumière (21) dans la direction d'un axe optique ;
une unité de mesure (23, 24) destinée à mesurer l'intensité, à chaque longueur d'onde, de la lumière à l'intérieur de la lumière ayant fait l'objet d'une distorsion chromatique créée par la lentille de diffraction (1) et focalisée sur la cible de mesure (200) ; et
une fibre optique (11) servant de trajet optique de la lentille de diffraction (1) à la source de lumière (21) et à l'unité de mesure (23, 24) ; dans lequel
l'extrémité de la fibre optique (11) est inclinée par rapport à l'axe optique de la lentille de diffraction (1), de sorte que le rayon de lumière primaire allant de la source de lumière (21) à la lentille de diffraction (1) soit incliné par rapport à l'axe optique de la lentille de diffraction (1).

2. Dispositif de mesure confocal selon la revendication 1, comprenant en outre : un objectif (2) disposé plus près de la cible de mesure (200) que de la lentille de diffraction (1), dans lequel l'objectif (2) focalise la lumière ayant fait l'objet d'une distorsion chromatique par la lentille de diffraction (1) sur la cible de mesure (200).

3. Dispositif de mesure confocal faisant appel à de l'optique confocale pour mesurer un profil d'une cible de mesure (200), le dispositif de mesure confocal comprenant :
une source de lumière (21) destinée à émettre de la lumière polychromatique ;
une lentille de diffraction (1) permettant une distorsion chromatique de la lumière émise à partir de la source de lumière (21) dans la direction d'un axe optique ;
un élément optique (2) disposé soit entre la source de lumière (21) et la lentille de diffraction (1), soit plus près de la cible de mesure (200) que de la lentille de diffraction (1) ; et
une unité de mesure (23, 24) destinée à mesurer l'intensité, à chaque longueur d'onde, de la lumière à l'intérieur de la lumière ayant fait l'objet d'une distorsion chromatique créée par la lentille de diffraction (1) et focalisée sur la cible de mesure (200) ; dans lequel
un rayon de lumière primaire allant de la source de lumière (21) en direction de la lentille de diffraction (1) coïncide avec l'axe optique de la lentille de diffraction (1), et un axe optique de l'élément optique (2) est décalé par rapport à l'axe optique de la lentille de diffraction (1).

4. Dispositif de mesure confocal selon la revendication 3, comprenant en outre : une fibre optique (11) utilisée en tant que le trajet optique allant de la lentille de diffraction (1) à la source de lumière (21) et à l'unité de mesure (23, 24) ; dans lequel
l'extrémité de la fibre optique (11) est inclinée par rapport à l'axe optique de l'élément optique (2).

5. Dispositif de mesure confocal faisant appel à de l'optique confocale pour mesurer un profil d'une cible de mesure (200), le dispositif de mesure confocal comprenant :
une source de lumière (21) destinée à émettre de la lumière polychromatique ;
une lentille de diffraction (1) permettant une distorsion chromatique de la lumière émise à partir de la source de lumière (21) dans la direction d'un axe optique ;
une unité de mesure (23, 24) destinée à mesurer l'intensité, à chaque longueur d'onde, de la lumière à l'intérieur de la lumière ayant fait l'objet d'une distorsion chromatique créée par la lentille de diffraction (1) et focalisée sur la cible de mesure (200) ; et
une tête de mesure optique (10) contenant la lentille de diffraction (1) ; dans lequel
l'axe optique de la lentille de diffraction (1) est incliné par rapport à l'axe long de la tête de mesure optique (10e), ou par rapport à une surface d'émission (10i) de la tête de mesure optique (10) à partir de laquelle la lumière est émise en direction de la cible de mesure (200).

6. Dispositif de mesure confocal selon la revendication 5, comprenant en outre : un objectif (2) disposé plus près de l'unité de mesure (200) que de la lentille de diffraction (1), dans lequel l'objectif (2) focalise la lumière ayant fait l'objet d'une distorsion chromatique par la lentille de diffraction (1) sur la cible de mesure (200).
